# EUROPEAN PATENT APPLICATION

(11) **EP 4 358 208 A1**
(43) Date of publication of application: **24.04.2024**
(21) Application number: 22946286.6
(22) Date of filing: 17.06.2022
(51) Int. Cl.: H01M 10/04, H01M 10/056

(54) **BATTERY PACK AND ELECTRIC DEVICE THEREOF**

(71) Applicant: Contemporary Amperex Technology Co., Limited, Ningde City, Fujian 352100 (CN)
(72) Inventor: SUN, Jingxuan, Ningde City, Fujian 352100 (CN); LIU, Qian, Ningde City, Fujian 352100 (CN); YE, Yonghuang, Ningde City, Fujian 352100 (CN); LI, Quanguo, Ningde City, Fujian 352100 (CN); XU, Xiaofu, Ningde City, Fujian 352100 (CN); WU, Zeli, Ningde City, Fujian 352100 (CN); XIAO, Dejun, Ningde City, Fujian 352100 (CN); YU, Chunpeng, Ningde City, Fujian 352100 (CN)
(74) Representative: Kraus & Lederer PartGmbB
(86) International application number: PCT/CN2022/099470
(87) International publication number: WO 2023/240599

(57) **Abstract**

This application relates to a battery pack. The battery pack includes at least a first battery cell and a second battery cell. The battery pack includes a region A and a region B. The region A is a region of a low thermal insulation capability and is located on all sides and/or at a bottom of the battery pack. A remaining region is the region B. A percentage of a number of the first battery cells among battery cells included in the region A is 10% to 100%. A percentage of a number of the second battery cells among battery cells included in the region B is 5% to 100%.

A volumetric energy density D of the first battery cell and a volumetric energy density D of the second battery cell are D₁ and D₂ respectively. An ionic conductivity σ of an electrolyte solution at -10 °C is σ₁ in the first battery cell and σ₂ in the second battery cell. It is defined that K = D² × σ, so that K₁ = D₁² × σ₁ and K₂ = D₂²×σ₂.

When D₁ = D₂, K satisfies 0.2 < K₂/K₁ ≤ 0.99.

When D₁ ≠ D₂, K satisfies 1.01 ≤ K₂/K₁ ≤ 10.

This application further relates to an electrical device containing the battery pack.

## Description

### TECHNICAL FIELD

This application relates to the field of secondary batteries, and in particular, to a battery pack and an electrical device containing same.

### BACKGROUND

A secondary battery has become the most popular energy storage system by virtue of cost-effectiveness, longevity, safety, and other features, and has now been widely used in fields such as battery electric vehicles, hybrid electric vehicles, and smart grids. A plurality of secondary batteries are arranged in a specified spatial manner to form a battery pack that directly serves as a power source of an electric vehicle. Secondary batteries are used in an increasingly wider range due to clean and renewable characteristics. To meet the needs of different environments and application scenarios, the requirements on the performance of secondary batteries in the industry keep increasing. For example, as a driving energy of new energy vehicles, the secondary batteries are used in different regions of the world, and need to ensure both the safety performance in high-temperature environments and normal operation in low-temperature and extremely cold regions. Due to intense polarization in a case of low temperatures, a lithium-ion battery reaches a cut-off voltage prematurely during discharge, thereby reducing the discharge energy and the power. Therefore, the low-temperature performance is an inherent bottleneck of commonly used lithium-ion batteries, and little breakthrough has been made over a long period in improving the low-temperature performance.

In the prior art, this problem is mainly solved by a battery pack that contains two types of battery cells that vary in cold resistance. Such technical solutions in the prior art have improved the low-temperature discharge capacity of the entire battery pack, but give rise to a sharp difference in safety performance between the batteries that operate in different types of chemical systems. Therefore, in the field of secondary batteries currently, there is still a demand for a battery pack and an electrical device that are excellent in both low-temperature discharge capacity and overall safety performance.

### SUMMARY

This application is developed in view of the above problems, and an objective of this application is to provide a battery pack to solve the technical problem that the low-temperature discharge capacity and the overall safety performance are unable to be high concurrently.

To achieve the above object, a first aspect of this application provides a battery pack. The battery pack includes at least a first battery cell and a second battery cell. The battery pack includes a region A and a region B. The region A is a region of a low thermal insulation capability and is located on all sides and/or at a bottom of the battery pack. A remaining region is the region B. A percentage of a number of the first battery cells among battery cells included in the region A is 10% to 100%. A percentage of a number of the second battery cells among battery cells included in the region B is 5% to 100%.

A volumetric energy density D of the first battery cell and a volumetric energy density D of the second battery cell are D₁ and D₂ respectively. An ionic conductivity σ of an electrolyte solution at -10 °C is σ₁ in the first battery cell and σ₂ in the second battery cell. It is defined that K = D² × σ, so that K₁ = D₁² × σ₁ and K₂ = D₂²×σ₂.

When D₁ = D₂, K satisfies 0.2 < K₂/K₁ ≤ 0.99.

When D₁ ≠ D₂, K satisfies 1.01 ≤ K₂/K₁ ≤ 10.

By combining and differently arranging the batteries that possess the same or different volumetric energy densities D and the same or different electrolyte solution ion conductivities σ, this application ensures desirable overall safety performance of the battery pack while making up for deficiency in the low-temperature weak region.

In any embodiment, when D₁ = D₂, K satisfies 0.25 ≤ K₂/K₁ ≤ 0.98, and optionally 0.3 ≤ K₂/K₁ ≤ 0.96. When D₁ ≠ D₂, K satisfies 1.02 ≤ K₂/K₁ ≤ 5, and optionally 1.03 ≤ K₂/K₁ ≤ 3. By further optimizing the selection of the K value ratio in an appropriate range in a case that the volumetric energy density D is identical or different between the two types of battery cells separately, this application continuously improves the trade-off between the low-temperature performance and the overall safety performance of the battery pack.

In any embodiment, when D₁ = D₂, at -10 °C, the ionic conductivity σ₁ of the electrolyte solution in the first battery cell and the ionic conductivity σ₂ of the electrolyte solution in the second battery cell satisfy 0 mS/cm < |σ₁ - σ₂| < 8 mS/cm, and optionally 0.05 mS/cm < |σ₁ - σ₂| < 7 mS/cm, and further optionally 0.1 mS/cm < |σ₁ - σ₂| < 6 mS/cm. When the volumetric energy densities D of the two battery cells are the same, by setting the absolute value of the difference in the ionic conductivity σ between the two types of battery cells to fall within the specified range, the battery cells of different performances can match different regions with a temperature difference to improve the low-temperature endurance mileage and the power performance, and also avoid a considerable waste in capacity, performance, and cost caused by over-design.

A second aspect of this application provides another battery pack. The battery pack includes at least a first battery cell and a second battery cell. The battery pack includes a region A and a region B. The region A is a region of a low thermal insulation capability and is located on all sides and/or at a bottom of the battery pack. A remaining region is the region B. A percentage of a number of the first battery cells among battery cells included in the region A is 10% to 100%. A percentage of a number of the second battery cells among battery cells included in the region B is 5% to 100%.

A volumetric energy density D of the first battery cell and a volumetric energy density D of the second battery cell are D₁ and D₂ respectively. A viscosity η of an electrolyte solution at -10 °C is η₁ in the first battery cell and η₂ in the second battery cell. It is defined that M = D/η, so that M₁ = D₁/η₁, M₂ = D₂/η₂.

When D₁ = D₂, M satisfies 0.2 < M₂/M₁ ≤ 0.99.

When D₁ ≠ D₂, M satisfies 1.01 ≤ M₂/M₁ ≤ 10.

By combining and differently arranging the batteries that possess the same or different volumetric energy densities D and the same or different electrolyte solution viscosities η, this application ensures superior low-temperature performance and excellent overall safety performance concurrently.

In any embodiment, when D₁ = D₂, M satisfies 0.25 ≤ M₂/M₁ ≤ 0.98, and optionally 0.3 ≤ M₂/M₁ ≤ 0.96. When D₁ ≠ D₂, M satisfies 1.02 ≤ M₂/M₁ ≤ 9, and optionally 1.03 ≤ M₂/M₁ ≤ 8. By further optimizing the selection of the M value ratio between the two types of battery cells in a case that the volumetric energy density D is identical or different between the two types of battery cells separately, this application can achieve an optimal trade-off between the low-temperature performance and the overall safety performance of the battery pack.

In any embodiment, when D₁ = D₂, at -10 °C, the viscosity η₁ of the electrolyte solution in the first battery cell and the viscosity η₂ of the electrolyte solution in the second battery cell satisfy 0 < |η₂ - η₁| < 5 mPa·s, and optionally 0.05 mPa·s < |η₂ - η₁| < 4 mPa·s, and further optionally 0.1 mPa·s < |η₂ - η₁| < 3 mPa·s. By setting the absolute value of the difference in the viscosity η between the two types of battery cells, this application can conveniently adjust the trade-off between the low-temperature performance and the overall safety performance of the battery pack, and also avoid a considerable waste capacity exertion, performance, cost-effectiveness and the like caused by over-design.

In any embodiment, a percentage of a number of the first battery cells among battery cells included in the region A is 10% to 100%, and optionally 20% to 90%, and further optionally 20% to 80%; and, a percentage of a number of the second battery cells among battery cells included in the region B is 20% to 100%, and optionally 40% to 100%, and further optionally 60% to 100%.

In any embodiment, length-width diagonals of the battery pack in a horizontal direction are Lc, a region formed by connecting four points on the two diagonals is defined as the region B, each of the four points is at a distance of 1/5 Lc from an endpoint of the corresponding diagonal, and a remaining region is defined as the region A. In some embodiments, when the battery cells in the battery pack are stacked in a plurality of layers, a vertical height of the battery pack is defined as Ld, a region located below a point that is at a distance of 1/5 Ld from the bottom is defined as the region A, and a remaining region corresponding to 4/5 Ld above the point is defined as the region B. By dividing the space of the battery pack in the horizontal direction and the vertical direction, this application can reasonably define a region that is less capable of thermal insulation and a region that is more capable of thermal insulation. The battery cells that meet different performance requirements are disposed in the corresponding regions, thereby implementing a trade-off between the low-temperature performance and the overall safety performance of the battery pack.

In any embodiment, different regions in the battery pack are endowed with different thermal insulation capabilities, and at least two types of regions satisfy a condition that a temperature difference ΔT between the two types of regions falls within a range of 0 < ΔT < 10 °C, and optionally 0.1 < ΔT < 9 °C, and further optionally 0.2 < ΔT < 8 °C. By setting the range of the temperature difference between at least two regions in the battery pack, this application helps to reflect the effect of differentiated arrangement and improve the uniformity of the temperature of the battery pack.

In any embodiment, a film-forming resistance of a positive electrode plate in the first battery cell and a film-forming resistance of a positive electrode plate in the second battery cell are Rct1 and Rct2 respectively. The two film-forming resistances satisfy 1 ≤ Rct1/Rct2 ≤ 4, and optionally 1.01 ≤ Rct1/Rct2 ≤ 3.5, and further optionally 1.02 ≤ Rct1/Rct2 ≤ 3. Rct is an important parameter in a usage scenario of low-temperature discharge, and a smaller value of Rct indicates better low-temperature performance. Controlling the Rct ratio to fall within a reasonable range ensures effective improvement of low-temperature performance and avoids over-design.

In any embodiment, a coagulation point of the electrolyte solution of all battery cells in the battery pack is less than or equal to -20 °C, and optionally less than or equal to -30 °C. By setting the upper limit of the coagulation point of the electrolyte solution in the battery cell, this application ensures that the battery pack achieves a good discharge capacity under low-temperature conditions. The lower the coagulation point, the wider the window of applicability under low-temperature conditions.

In any embodiment, a volumetric energy density D of both the first battery cell and the second battery cell satisfies 100 Wh/L < D < 1000Wh/L, and optionally 200 Wh/L < D < 900 Wh/L, and further optionally 300 Wh/L < D < 800 Wh/L. When the volumetric energy density D of the two battery cells falls within the numerical range specified above, this application can further implement the adjustment of the low-temperature performance of the battery pack, and make the performance better match the endurance requirement and the power requirement in various application scenarios.

In any embodiment, when D₁ ≠ D₂, the battery pack further includes a third battery cell. The third battery cell is formed by a mixture of a main material system of the first battery cell and a main material system of the second battery cell. A volumetric energy density of the third battery cell is D₃, and D₃ falls between D₁ and D₂. In some embodiments, an ionic conductivity σ of an electrolyte solution of the third battery cell at -10 °C is σ₃, and, when it is defined that K₃ = D₃² × σ₃, K₃ falls between K₁ and K₂; or, a viscosity η of an electrolyte solution of the third battery cell at -10 °C is η₃, and, when it is defined that M₃ = D₃/η₃, M₃ falls between M₁ and M₂. By disposing a third battery cell or another type of battery cell in addition to the above two types of battery cells, the low-temperature performance and the overall safety performance of the battery pack can be more precisely controlled and adjusted, thereby making it easier to achieve a trade-off between the low-temperature performance and the overall safety performance.

In any embodiment, the battery cells each are independently selected from a lithium-ion battery, a lithium metal battery, or a sodium-ion battery. In some embodiments, a chemical system of a positive active material of the battery cell is independently selected from a lithium nickel cobalt manganese system, a lithium iron phosphate system, a lithium manganese iron phosphate system, a lithium vanadium iron phosphate system, a lithium vanadium phosphate system, a lithium cobalt oxide system, a lithium nickel oxide system, a lithium-rich manganese system, a lithium nickel cobalt aluminum system, a lithium manganese oxide system, or a Prussian blue system, a polyanion-based system, an oxide-based system, or a dual-ion battery system. The selection of the chemical system of the battery cell can make the performance of the battery pack more abundant and adjustable.

In any embodiment, the battery pack includes *a* first battery cells and *b* second battery cells, where *a* and *b* are both natural numbers greater than or equal to 1, and 0.01 < *a*/*b* ≤ 200, and optionally 0.05 ≤ *a*/*b* ≤ 180, and further optionally 0.1 ≤ *a*/*b* ≤ 150. The quantity ratio between the two types of battery cells may be used to adjust the low-temperature performance and safety performance of the battery pack.

A third aspect of this application provides an electrical device. The electrical device includes the battery pack according to the first aspect of this application and/or the battery pack according to the second aspect.

### BRIEF DESCRIPTION OF DRAWINGS

To describe the technical solutions of this application more clearly, the following outlines the drawings to be used in the embodiments of this application. Evidently, the drawings outlined below are merely a part of embodiments of this application. A person of ordinary skill in the art may derive other drawings from such drawings without making any creative efforts.
FIG. 1 is a schematic diagram of a lithium-ion secondary battery according to an embodiment of this application;
FIG. 2 is an exploded view of a lithium-ion secondary battery shown in FIG. 1 according to an embodiment of this application;
FIG. 3 is a schematic diagram of a battery pack according to an embodiment of this application;
FIG. 4 is an exploded view of a battery pack shown in FIG. 3 according to an embodiment of this application;
FIG. 5 is a schematic diagram of region division and battery cell arrangement of a battery pack shown in FIG. 3 according to an embodiment of this application; and
FIG. 6 is a schematic diagram of a device using a battery pack as a power supply according to an embodiment of this application.

### List of reference numerals:

1. battery pack;
2. upper box;
3. lower box;
4. battery module;
5. lithium-ion secondary battery;
51. housing;
52. electrode assembly;
53. cover plate

### DETAILED DESCRIPTION OF EMBODIMENTS

For brevity, some specific numerical ranges are disclosed herein. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the prior art, battery cells with different low-temperature discharge capacities are placed in different regions of a battery pack to improve the low-temperature performance of the battery pack. However, this solution poses substantial risks in terms of the overall safety performance of the battery pack. If different types of battery cells are just differentiated by the discharge capacity, the battery cells with good discharge performance but poor safety performance may be placed on the periphery of the battery pack. However, the peripheral region of the battery pack is more prone to thermal runaway in circumstances such as crushing, collision, high-temperature heating, and dropping. In this way, a battery cell of poor safety performance may be just placed in a high-risk region, thereby making the constructed battery pack unable to achieve a good trade-off between the low-temperature discharge performance and the overall safety performance.

The inventor finds that, by selecting and setting the specified parameters of different types of battery cells in the battery pack and making the parameter values fall within a specified range, this application can achieve an effective trade-off between the low-temperature discharge performance and the overall safety performance of the battery pack.

Specifically, a first aspect of this application provides a battery pack. The battery pack includes at least a first battery cell and a second battery cell. The battery pack includes a region A and a region B. The region A is a region of a low thermal insulation capability and is located on all sides and/or at a bottom of the battery pack. A remaining region is the region B. A percentage of a number of the first battery cells among battery cells included in the region A is 10% to 100%. A percentage of a number of the second battery cells among battery cells included in the region B is 5% to 100%.

A volumetric energy density D of the first battery cell and a volumetric energy density D of the second battery cell are D₁ and D₂ respectively. An ionic conductivity σ of an electrolyte solution at -10 °C is σ₁ in the first battery cell and σ₂ in the second battery cell. It is defined that K = D² × σ, so that K₁ = D₁² × σ₁ and K₂ = D₂²×σ₂.

When D₁ = D₂, K satisfies 0.2 < K₂/K₁ ≤ 0.99.

When D₁ ≠ D₂, K satisfies 1.01 ≤ K₂/K₁ ≤ 10.

For the battery pack defined in the first aspect of this application, when the volumetric energy densities D of the two types of battery cells contained in the battery pack are the same, it indicates that main materials of the two types of battery cells and the mass percentage of the materials used in the battery cells are identical, where the main materials are materials of the positive electrode, the negative electrode, and the separator used in the two types of battery cells. In this case, by changing just the low-temperature conductivity σ of the electrolyte solutions in the batter cells, the battery cells placed in the weak region of thermal insulation in the battery pack are endowed with a higher low-temperature discharge capacity, without deteriorating the safety performance of the battery pack. In addition, the low-temperature conductivity difference is controlled to fall within a reasonable range, thereby avoiding a considerable waste in terms of capacity, performance, and cost, and achieving desirable overall safety performance of the battery pack while making up for the deficiency in the endurance mileage and power performance in the low-temperature weak region.

When the volumetric energy densities D of the two types of battery cells contained in the battery pack are different, it indicates that the ingredients of main materials or the mass percentage of the ingredients in the main materials is different between the two types of battery cells. According to experience in lithium-ion battery systems, a battery with a relatively high volumetric energy density D usually exhibits relatively poor safety performance. The volume energy density D affects the severity of the thermal runaway of the battery and the speed of heat radiation to the surroundings. Therefore, the volume energy density D is usually in inverse proportion to the safety performance. That is, the larger the value of 1/D, the safer the battery pack. In addition, a system with a high energy density is usually superior in the low-temperature discharge capacity. Therefore, generally, the requirement on the low-temperature conductivity in an electrolyte solution system used in conjunction is relatively low. Based on the above rules, the lithium-ion battery cells prepared in different systems are used in conjunction in the battery pack. The battery cell prepared in a system with a smaller K value is more suitable for being placed in the weak region of thermal insulation. By setting the K value ratio to fall within the specified range, this application ensures relatively high safety performance of the whole battery pack while making up for the deficiency of the weak region that exhibits poor low-temperature performance.

Overall, by selecting an appropriate volumetric energy density D of the two types of battery cells and an appropriate ionic conductivity σ of the electrolyte solutions of the battery cells under low-temperature conditions, and by setting the product K = D₂ × σ to fall within an appropriate range, this application can achieve an optimal trade-off between the low-temperature discharge capacity and the overall safety performance of the battery pack.

In some embodiments, when D₁ = D₂, K satisfies 0.25 ≤ K₂/K₁ ≤ 0.98, and optionally 0.3 ≤ K₂/K₁ ≤ 0.96. When D₁ ≠ D₂, K satisfies 1.02 ≤ K₂/K₁ ≤ 5, and optionally 1.03 ≤ K₂/K₁ ≤ 3. By further optimizing the selection of the K value ratio in an appropriate range in a case that the volumetric energy density D is identical or different between the two types of battery cells separately, this application continuously improves the trade-off between the low-temperature performance and the overall safety performance of the battery pack. The volumetric energy density D of a battery cell may be obtained by measuring the discharge capacity of the battery cell and then dividing the discharge capacity by the volume of the battery cell, calculated as: D = discharge capacity of the battery cell/volume of the battery cell, in Wh/L (watt hour/liter). The volumetric energy density D of a battery cell is mainly related to the main materials and the mass percentage of the ingredients of the main materials such as the positive electrode, the negative electrode, and the separator of the battery cell. Therefore, the volumetric energy density D may be adjusted by selecting specific ingredients of the main materials and the mass percentage of the ingredients. The ionic conductivity σ of the electrolyte solution in the battery cell at -10 °C may be directly measured at the corresponding temperature by using a conductivity meter. For a battery cell of a given chemical system, the ionic conductivity σ of the electrolyte solution in the battery cell may be adjusted by selecting the specific types of ions in the electrolyte solution as well as the types of solvents, co-solvents, and additives, and the mass percent thereof.

In some embodiments, when D₁ = D₂, at -10 °C, the ionic conductivity σ₁ of the electrolyte solution in the first battery cell and the ionic conductivity σ₂ of the electrolyte solution in the second battery cell satisfy 0 < |σ₁ - σ₂| < 8 mS/cm, and optionally 0.05 mS/cm < |σ₁ - σ₂| < 7 mS/cm, and further optionally 0.1 mS/cm < |σ₁ - σ₂| < 6 mS/cm. When the volumetric energy densities D of the two battery cells are the same, by setting the absolute value of the difference in the ionic conductivity σ between the two types of battery cells to fall within the specified range, this application can favorably adjust the trade-off between the low-temperature performance and safety performance of the battery pack, and avoid a considerable waste in capacity, performance, and cost caused by over-design. In some embodiments, the ionic conductivity σ of the electrolyte solution at -10 °C is set to fall within an overall range of 0.5 to 15 mS/cm, and optionally 1 to 10 mS/cm.

A second aspect of this application provides another battery pack. The battery pack includes at least a first battery cell and a second battery cell. The battery pack includes a region A and a region B. The region A is a region of a low thermal insulation capability and is located on all sides and/or at a bottom of the battery pack. A remaining region is the region B. A percentage of a number of the first battery cells among battery cells included in the region A is 10% to 100%. A percentage of a number of the second battery cells among battery cells included in the region B is 5% to 100%.

A volumetric energy density D of the first battery cell and a volumetric energy density D of the second battery cell are D₁ and D₂ respectively. A viscosity η of an electrolyte solution at -10 °C is η₁ in the first battery cell and η₂ in the second battery cell. It is defined that M = D/η, so that M₁ = D₁/η₁, M₂ = D₂/η₂.

When D₁ = D₂, M satisfies 0.2 < M₂/M₁ ≤ 0.99.

When D₁ ≠ D₂, M satisfies 1.01 ≤ M₂/M₁ ≤ 10.

For the battery pack defined in the second aspect of this application, when the volumetric energy densities of the two types of battery cells contained in the battery pack are the same, it indicates that main materials of the two types of battery cells and the mass percentage of the materials used in the battery cells are identical, where the main materials are materials of the positive electrode, the negative electrode, and the separator used in the two types of battery cells. In this case, by changing just the low-temperature viscosity of the electrolyte solutions in the two types of battery cells, the battery cells placed in the weak region of thermal insulation in the battery pack are endowed with a higher low-temperature discharge capacity, without deteriorating the safety performance of the battery pack. In addition, the low-temperature viscosity ratio is controlled to fall within a reasonable range, thereby avoiding a considerable waste in terms of capacity, performance, and cost, and achieving desirable overall safety performance of the battery pack while making up for the deficiency in the endurance mileage and power performance in the low-temperature weak region.

When the volumetric energy densities of the two types of battery cells contained in the battery pack are different, it indicates that the ingredients of main materials or the mass percentage of the ingredients in the main materials is different between the two types of battery cells. According to experience in lithium-ion battery systems, a battery with a relatively high volumetric energy density D usually exhibits relatively poor safety performance. The volume energy density D affects the severity of the thermal runaway of the battery and the speed of heat radiation to the surroundings. Therefore, the volume energy density D is usually in inverse proportion to the safety performance. That is, the larger the value of 1/D, the safer the battery pack. In addition, a system with a high energy density is usually superior in the low-temperature discharge capacity. Therefore, generally, in an electrolyte solution system used in conjunction, the requirement for reducing the viscosity under low-temperature conditions is relatively low. Based on the above rules, the lithium-ion battery cells prepared in different systems are used in conjunction in the battery pack. Assuming M = D/η, the battery cell prepared in a system with a smaller K value is more suitable for being placed in the weak region of thermal insulation. By setting the M value ratio to fall within the specified range, this application ensures relatively high safety performance of the whole battery pack while making up for the deficiency of the weak region that exhibits poor low-temperature performance.

Therefore, by selecting the volumetric energy density D of the two types of battery cells and the viscosity η of the electrolyte solution of the battery cells at a low temperature, and by setting the ratio M = D/η to fall within an appropriate range, different types of battery cells can be combined and differently arranged, so that the battery pack can be excellent in both the low-temperature performance and the overall safety performance.

In some embodiments, when D₁ = D₂, M satisfies 0.25 ≤ M₂/M₁ ≤ 0.98, and optionally 0.3 ≤ M₂/M₁ ≤ 0.96. When D₁ ≠ D₂, M satisfies 1.02 ≤ M₂/M₁ ≤ 9, and optionally 1.03 ≤ M₂/M₁ ≤ 8. By further optimizing the selection of the M value ratio between the two types of battery cells in a case that the volumetric energy density D is identical or different between the two types of battery cells separately, this application achieves an optimal trade-off between the low-temperature performance and the overall safety performance of the battery pack.

In some embodiments, when D₁ = D₂, at -10 °C, the viscosity η₁ of the electrolyte solution in the first battery cell and the viscosity η₂ of the electrolyte solution in the second battery cell satisfy 0 < |η₂ - η₁| < 5 mPa·s, and optionally 0.05 mPa·s < |η₂ - η₁| < 4 mPa-s, and further optionally 0.1 mPa-s < |η₂ - η₁| < 3 mPa·s. By setting the absolute value of the difference in the viscosity η between the two types of battery cells, this application can conveniently adjust the trade-off between the low-temperature performance and the overall safety performance of the battery pack, and also avoid a considerable waste capacity exertion, performance, cost-effectiveness and the like caused by over-design. In some embodiments, the viscosity η of the electrolyte solution at -10 °C is set to fall within an overall range of 3 to 20 mPa·s, and optionally 5 to 15 mPa·s.

In some embodiments, a percentage of a number of the first battery cells among battery cells included in the region A is 10% to 90%, and optionally 20% to 90%, and further optionally 20% to 80%; and, a percentage of a number of the second battery cells among battery cells included in the region B is 20% to 100%, and optionally 40% to 100%, and further optionally 60% to 100%. The ratio of the number of the first battery cells and the number of the second battery cells between the region A and the region B can be adjusted based on the K value and the M value of each type of battery cells.

In some embodiments, length-width diagonals of the battery pack in a horizontal direction are Lc, a region formed by connecting four points on the two diagonals is defined as the region B, each of the four points is at a distance of 1/5 Lc from an endpoint of the corresponding diagonal, and a remaining region is defined as the region A. The region A formed in this way is located at the relatively peripheral part of the battery pack, and therefore, is less capable of thermal insulation than an inner region. When the battery pack works at a low temperature, the battery cells in the region A need to be more capable of discharging at a low temperature. However, because the region A is located in the peripheral part, the safety performance of the region A is relatively low. Therefore, it is necessary to make an overall plan for the low-temperature discharge capability and the safety performance of the battery cells in the region A to achieve a trade-off. Correspondingly, the region B is located in an inner part, and therefore, is more capable of thermal insulation and safer. The region A and the region B arranged in the horizontal direction reasonably define the spatial distribution of the two types of battery cells that exhibit different performances.

In some embodiments, when the battery cells in the battery pack are stacked in a plurality of layers, a vertical height of the battery pack is defined as Ld, a region located below a point that is at a distance of 1/5 Ld from the bottom is defined as the region A, and a remaining region corresponding to 4/5 Ld above the point is defined as the region B. By also dividing the space of the battery pack in the vertical direction, a three-dimensional performance distribution of the battery pack can be constructed. The space division in the vertical direction can be combined with the space division into the region A and the region B in the horizontal direction, so as to achieve an optimal trade-off between the low-temperature performance and the overall safety performance. The numerical ranges of Lc and Ld are not a focus of attention, and may be selected by technical personnel according to practical needs and the reasonable configuration requirement.

In some embodiments, the battery pack assumes a cuboidal structure, and is rectangular in a horizontal plane, with a length La, a width Lb, a length-width diagonal Lc, and a vertical height Ld.

In some embodiments, different regions in the battery pack are endowed with different thermal insulation capabilities, and at least two types of regions satisfy a condition that a temperature difference ΔT between the two types of regions falls within a range of 0 < ΔT < 10 °C, and optionally 0.1 < ΔT < 9 °C, and further optionally 0.2 < ΔT < 8 °C. By setting the range of the temperature difference between at least two regions in the battery pack, this application helps to reflect the effect of differentiated arrangement and improve the uniformity of the temperature of the battery pack. To form a temperature gradient to facilitate a balance between battery cells of different performances, at least two types of regions with a temperature difference ΔT greater than 0 °C need to exist in the battery pack. However, when the temperature difference ΔT is excessive, it is difficult to implement the balance within the battery pack.

In some embodiments, a film-forming resistance of a positive electrode plate in the first battery cell and a film-forming resistance of a positive electrode plate in the second battery cell are Rct1 and Rct2 respectively. The two film-forming resistances satisfy 1 ≤ Rct1/Rct2 ≤ 4, and optionally 1.01 ≤ Rct1/Rct2 ≤ 3.5, and further optionally 1.02 ≤ Rct1/Rct2 ≤ 3. When the ratio of the film-forming resistance between the two types of battery cells falls within the specified range, the discharge capacity can be further distinguished between the two types of battery cells, so as to improve the performance balance of the battery pack. The film-forming resistance reflects the discharge capacity of the battery cells. The ratio of the film-forming resistance between the two types of battery cells need to fall within a reasonable range, so as to facilitate adjustment of the spatial arrangement of different battery cells to implement a precise balance. Rct is an important parameter in a usage scenario of low-temperature discharge, and a smaller value of Rct indicates better low-temperature performance. Controlling the Rct ratio to fall within a reasonable range ensures effective improvement of low-temperature performance and avoids over-design.

In some embodiments, a coagulation point of the electrolyte solution of all battery cells in the battery pack is less than or equal to -20 °C, and optionally less than or equal to -30 °C. By setting the coagulation point of the electrolyte solution in the battery cell to fall within the specified range, the battery pack is ensured to achieve a good discharge capacity under low-temperature conditions. When the coagulation point is overly high, after the battery pack works at a low temperature for a long time, the ion migration capability in the electrolyte solution is reduced drastically, thereby being adverse to exerting the low-temperature performance. By setting the upper limit of the coagulation point of the electrolyte solution in the battery cell, this application ensures that the battery pack achieves a good discharge capacity under low-temperature conditions. The lower the coagulation point, the wider the window of applicability under low-temperature conditions.

In some embodiments, a volumetric energy density D of both the first battery cell and the second battery cell satisfies 100 Wh/L < D < 1000Wh/L, and optionally 200 Wh/L < D < 900 Wh/L, and further optionally 300 Wh/L < D < 800 Wh/L. When the volumetric energy density D of the two battery cells falls within the numerical range specified above, this application can further implement the adjustment of the low-temperature performance of the battery pack. In addition, selecting a material system that falls within an appropriate energy density range can make the battery cells commercially applicable and competitive and meet the endurance and power requirements in various application scenarios.

In some embodiments, when D₁ ≠ D₂, the battery pack further includes a third battery cell. The third battery cell is formed by a mixture of a main material system of the first battery cell and a main material system of the second battery cell. A volumetric energy density of the third battery cell is D₃, and D₃ falls between D₁ and D₂. In some embodiments, an ionic conductivity σ of an electrolyte solution of the third battery cell at -10 °C is σ₃, and, when it is defined that K₃ = D₃² × σ₃, K₃ falls between K₁ and K₂; or, a viscosity η of an electrolyte solution of the third battery cell at -10 °C is η₃, and, when it is defined that M₃ = D₃/η₃, M₃ falls between M₁ and M₂. By disposing a third battery cell or another type of battery cell in addition to the above two types of battery cells, the low-temperature performance and the overall safety performance of the battery pack can be more precisely controlled and adjusted, thereby making it easier to achieve a trade-off between the low-temperature performance and the overall safety performance. The third type of battery cells can expand the performance adjustment range of the battery pack, make the selection of battery cells not limited to battery cells of different pure systems, and enable the battery cells to be selected among a combination of battery cells of various hybrid systems and pure systems.

In some embodiments, the battery cells each are independently selected from a lithium-ion battery, a lithium metal battery, or a sodium-ion battery. In some embodiments, a chemical system of a positive active material of the battery cell is independently selected from a lithium nickel cobalt manganese system, a lithium iron phosphate system, a lithium manganese iron phosphate system, a lithium vanadium iron phosphate system, a lithium vanadium phosphate system, a lithium cobalt oxide system, a lithium nickel oxide system, a lithium-rich manganese system, a lithium nickel cobalt aluminum system, a lithium manganese oxide system, or a Prussian blue system, a polyanion-based system, an oxide-based system, or a dual-ion battery system. The selection of the chemical system of the battery cell can make the performance of the battery pack more abundant and adjustable.

In some embodiments, the battery pack includes *a* first battery cells and *b* second battery cells, where *a* and *b* are both natural numbers greater than or equal to 1, and 0.01 < *a*/*b* ≤ 200, and optionally 0.05 ≤ *a*/*b* ≤ 180, and further optionally 0.1 ≤ *a*/*b* ≤ 150. When the quantity ratio between the two types of battery cells is controlled to fall within an appropriate range, the low-temperature performance and safety performance of the battery pack can be adjusted effectively.

The battery cells included in the battery pack are described in detail below. In some embodiments, both the first type of battery cells and the second type of battery cells are lithium-ion secondary batteries. As mentioned above, the battery cells may be battery cells prepared in other systems instead, such as a sodium-ion battery.

Generally, a lithium-ion secondary battery includes a positive electrode plate, a negative electrode plate, a separator, and an electrolyte. In a charge-and-discharge cycle of the battery, active ions are shuttled between the positive electrode plate and the negative electrode plate by intercalation and deintercalation. The separator is disposed between the positive electrode plate and the negative electrode plate to serve an isolation purpose. The electrolyte serves to conduct ions between the positive electrode plate and the negative electrode plate.

### [Electrolyte solution]

The electrolyte solution serves to conduct ions between the positive electrode plate and the negative electrode plate. The electrolyte solution includes an electrolyte salt and a solvent.

In this application, the electrolyte salt may be an electrolyte salt commonly used in a lithium-ion secondary battery, such as a lithium salt, including a lithium salt that can serve as a highly thermally stable salt, a lithium salt that can serve as a low-resistance additive, or a lithium salt that can suppress aluminum foil corrosion. As an example, the electrolyte salt may be at least one selected from lithium hexafluorophosphate (LiPF₆), lithium tetrafluoroborate (LiBF₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium difluorophosphate (LiPOzFz), lithium difluoro(bisoxalato)phosphate (LiDFOP), lithium fluorosulfonate (LiSO₃F), difluorobisoxalate (NDFOP), Li₂F(SO₂N)₂SO₂F, KFSI, CsFSI, Ba(FSI)₂, or LiFSO₂NSO₂CH₂CH₂CF₃.

The type of the solvent is not particularly limited, and may be selected according to practical needs. In some embodiments, the solvent is a nonaqueous solvent. Optionally, the solvent may include one or more of chain carbonate, cyclic carbonate, or carboxylate. In some embodiments, the solvent may be at least one selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, sulfolane (SF), methyl sulfonyl methane (MSM), ethyl methyl sulfone (EMS), or (ethylsulfonyl)ethane (ESE).

In some embodiments, the electrolyte solution further optionally includes another additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like. As an example, the additive is at least one selected from a cyclic carbonate compound containing an unsaturated bond, a halogenated cyclic carbonate compound, a sulfate compound, a sulfite compound, a sultone compound, a disulfonate compound, a nitrile compound, an aromatic compound, an isocyanate compound, a phosphazene compound, a cyclic anhydride compound, a phosphite compound, a phosphate compound, a borate compound, or a carboxylate compound.

### [Positive electrode plate]

The positive electrode plate includes a positive current collector and a positive electrode material layer disposed on at least one surface of the positive current collector. The positive electrode material layer includes a positive active material and carbon.

As an example, the positive current collector includes two surfaces opposite to each other in a thickness direction thereof. The positive electrode material layer is disposed on either or both of the two opposite surfaces of the positive current collector.

In the lithium-ion secondary battery according to this application, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, or silver alloy). The polymer material substrate may be, for example, polypropylene (PP), polyethylene terephthalate (PET), polybutylene terephthalate (PBT), polystyrene (PS), or polyethylene (PE).

The positive electrode material layer disposed on the surface of the positive current collector includes a positive active material. The positive active material used in this application may assume the structure represented by Formula (I), Formula (II), Formula (III), or Formula (IV) described above, and satisfy various numerical values defined therein. Optionally, the positive active materials represented by Formula (I), Formula (II), Formula (III), or Formula (IV) respectively each account for 60 wt% to 100 wt%, and optionally 80 wt% to 100 wt%, of the total weight of all positive active materials of the battery cell. In some embodiments, the positive active material may include one or more of lithium transition metal oxide, olivine-structured lithium-containing phosphate, or a modified compound thereof in addition to the foregoing materials. Examples of the lithium transition metal oxide may include but not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. Examples of the olivine-structured lithium-containing phosphate include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon, or a modified compound thereof. Such materials are all commercially available. The surface of the positive active material may be coated with carbon.

The positive electrode material layer optionally includes a conductive agent. The type of the conductive agent is not particularly limited, and may be selected by a person skilled in the art according to practical needs. As an example, the conductive agent for use in the positive electrode material may be at least one selected from superconductive carbon, acetylene black, carbon black, Ketjen black, carbon dots, carbon nanotubes, graphene, or carbon nanofibers.

The positive electrode material layer further optionally includes a binder. As an example, the binder may be one or more of styrene-butadiene rubber (SBR), water-based acrylic resin, polyvinylidene difluoride (PVDF), polytetrafluoroethylene (PTFE), poly(ethylene-co-vinyl acetate) (EVA), polyacrylic acid (PAA), carboxymethyl cellulose (CMC), polyvinyl alcohol (PVA), or polyvinyl butyral (PVB).

In this application, the positive electrode plate may be prepared according to a method known in the art. As an example, the preparation method includes: dispersing the carbon-coated positive active material, the conductive agent, and the binder in a solvent (such as N-methyl-pyrrolidone, NMP) to form a homogeneous positive electrode slurry, coating a positive current collector with the positive electrode slurry, and performing steps such as drying and cold pressing to obtain a positive electrode plate.

### [Negative electrode plate]

The negative electrode plate includes a negative current collector and a negative electrode material layer disposed on at least one surface of the negative current collector. The negative electrode material layer includes a negative active material.

For example, the negative current collector includes two surfaces opposite to each other in a thickness direction thereof. The negative electrode material layer is disposed on either or both of the two opposite surfaces of the negative current collector.

In the lithium-ion secondary battery according to this application, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, or silver alloy). The polymer material substrate may be, for example, polypropylene (PP), polyethylene terephthalate (PET), polybutylene terephthalate (PBT), polystyrene (PS), or polyethylene (PE).

In the lithium-ion secondary battery according to this application, the negative electrode material layer generally includes a negative active material, an optional binder, an optional conductive agent, and other optional agents, and is generally formed by applying and drying a negative electrode slurry. The negative electrode slurry is generally formed by dispersing a negative active material, an optional conductive agent, a binder, and the like into a solvent and then stirring well. The solvent may be N-methyl-pyrrolidone (NMP) or deionized water.

The type of the negative active material is not particularly limited in this application, and may be an active material known in the art for use in a negative electrode of a lithium-ion secondary battery, and may be selected by a person skilled in the art according to practical needs. As an example, the negative active material is one or more selected from graphite, soft carbon, hard carbon, mesocarbon microbeads, carbon fibers, carbon nanotubes, simple-substance silicon, silicon-oxygen compound, silicon-carbon compound, silicon-carbon composite, or lithium titanium oxide.

As an example, the conductive agent may be at least one selected from superconductive carbon, acetylene black, carbon black, Ketjen black, carbon dots, carbon nanotubes, graphene, or carbon nanofibers.

As an example, the binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

An example of other optional agents is a thickener (such as sodium carboxymethyl cellulose CMC-Na) or the like.

### [Separator]

A lithium-ion secondary battery that employs an electrolyte solution further includes a separator. The separator is disposed between the positive electrode plate and the negative electrode plate to serve an isolation purpose. The type of the separator is not particularly limited in this application, and may be any well-known porous separator that is highly stable both chemically and mechanically. In some embodiments, the material of the separator may be at least one selected from glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the lithium-ion secondary battery may include an outer package. The outer package may be configured to package the electrode assembly and the electrolyte.

In some embodiments, the outer package of the lithium-ion secondary battery may be a hard shell such as a hard plastic shell, an aluminum shell, a steel shell, or the like. Alternatively, the outer package of the lithium-ion secondary battery may be a soft package such as a pouch-type soft package. The material of the soft package may be plastic such as polypropylene (PP), polybutylene terephthalate (PBT), or polybutylene succinate (PBS).

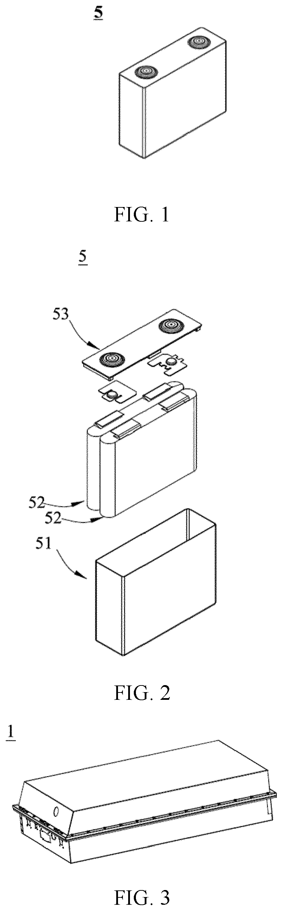

The shape of the lithium-ion secondary battery is not particularly limited in this application, and may be cylindrical, prismatic or any other shape. FIG. 1 shows a prismatic lithium-ion secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a lithium-ion secondary battery 5 may be one or more, and may be selected by a person skilled in the art as actually required.

In some embodiments, the lithium-ion secondary battery may be assembled to form a battery module 4. The battery module 4 may include one or more lithium-ion secondary batteries, and the specific number of lithium-ion batteries in a battery module may be selected by a person skilled in the art depending on practical applications and capacity of the battery module 4. In the battery module 4, a plurality of lithium-ion secondary batteries 5 may be arranged sequentially along a length direction of the battery module. Alternatively, the secondary batteries may be arranged in any other manner. Further, the plurality of lithium-ion secondary batteries 5 may be fixed by a fastener. Optionally, the battery module 4 may further include a shell that provides an accommodation space. The plurality of lithium-ion secondary batteries 5 are accommodated in the accommodation space.

In some embodiments, the lithium-ion secondary batteries 5 or the battery modules 4 may be assembled to form a battery pack 1. The number of lithium-ion secondary batteries 5 or battery modules 4 contained in a battery pack 1 may be selected by a person skilled in the art depending on practical applications and capacity of the battery pack 1.

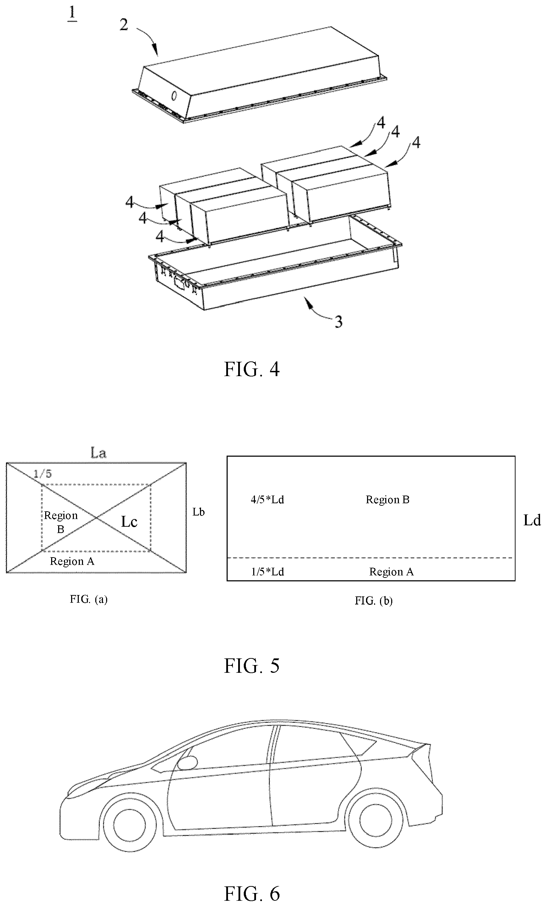

FIG. 3 and FIG. 4 show a battery pack 1 as an example. Referring to FIG. 3 and FIG. 4, the battery pack 1 may include a battery box and a plurality of battery cells disposed in the battery box. The battery box includes an upper box 2 and a lower box 3. The upper box 2 fits the lower box 3 to form a closed space for accommodating the battery cells.

FIG. 5 is a schematic diagram of region division and battery cell arrangement of a battery pack according to an embodiment of this application. In FIG. 5(a), in the horizontal direction of the battery pack, the length is La, the width is Lb, and the length-width diagonals are Lc. A region formed by connecting 4 points on the two length-width diagonals Lc is defined as a region B, each of the four points is at a distance of 1/5 Lc from an endpoint of the corresponding diagonal, and a remaining region is defined as a region A. In FIG. 5(b), a vertical height of the battery pack is defined as Ld, a region located below a point that is at a distance of 1/5 Ld from the bottom is defined as the region A, and a remaining region corresponding to 4/5 Ld above the point is defined as the region B. The battery cells are placed in corresponding regions based on the type and quantity ratio described in this application, so as to implement the adjustment of the discharge performance in different regions.

Further, this application further provides a device. The device includes the battery pack according to this application. The battery pack may be used as a power supply of the device, or used as an energy storage unit of the device. The device may be, but is not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery pack may be selected for use in the device according to the use requirements of the device.

FIG. 6 shows a device as an example. The device may be battery electric vehicle, a hybrid electric vehicle, a plug-in hybrid electric vehicle, or the like. To meet the requirements of the device for a high power and a high energy density of the lithium-ion secondary battery, a battery pack or a battery module may be used for the device.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.
1. Parameters of the battery cell and the performance test method of the battery pack are described below:

### 1) Determining the volumetric energy density

D = initial discharge capacity of the battery cell × discharge voltage plateau/volume of the battery cell

The initial discharge capacity of a battery cell is defined as a capacity of the battery cell measured when the battery cell is discharged at a current rate of 0.33 C and a temperature of 25 °C from an upper-limit cut-off voltage until a lower-limit cut-off voltage.

The discharge voltage plateau of a battery cell is defined as an average discharge voltage of the battery cell measured when the battery cell is discharged at a current rate of 0.33 C and a temperature of 25 °C from an upper-limit cut-off voltage until a lower-limit cut-off voltage of the battery cell.

### 2) Determining the conductivity of the electrolyte solution

Measuring the conductivity of the electrolyte solution by using a Leici DDSJ-318 conductivity meter. First, placing an electrode probe in a standard electrolyte solution to perform calibration, and then placing the electrode probe in the electrolyte solution to be tested, and measuring the conductivity after the ambient temperature becomes stable. Repeating the measurement step for three times, and averaging out the measurement values by being accurate to two decimal places.

### 3) Determining the viscosity of the electrolyte solution

Measuring the viscosity of the electrolyte solution with reference to the standard GB/T 10247-2008, and setting the temperature to -10 °C.

### 4) Testing the capacity retention rate of the battery pack

Testing the 25 °C discharge capacity: Putting the battery pack in a 25 °C environment, and charging and discharging the lithium-ion battery at a fixed rate of 1/3 C (1 C = nominal capacity of the battery cell). Repeating this charge-and-discharge step for three cycles, and recording the discharge capacity at the end of the third cycle as the nominal capacity C₁ of the battery pack.

Testing the -20 °C discharge capacity: Putting the battery pack in a -20 °C environment, and discharging the lithium-ion battery at a fixed rate of 1/3 C₁ until a lower-limit cut-off voltage. Recording the discharge capacity at this time as C₂.

Calculating the -20 °C discharge capacity retention rate of the battery pack: The ratio of C₂ to C₁ is the discharge capacity retention rate of the battery pack at a temperature of -20 °C.

5) Testing the thermal spread: Penetrating a battery cell to check whether the heat generated by thermal runaway of the penetrated battery cell in a battery pack spreads to an adjacent battery cell. Combining two or more battery cells to form a sample battery module. Fully charging the sample battery module, and fixing the sample battery module by using two perforated steel sheet clamps. Taking a high-temperature-resistant stainless steel needle with a diameter of 8 mm (the cone angle of the needle tip is 45°, and the surface of the steel needle is smooth and clean, free from rust, oxide layer, and oil smear). Thrusting the stainless steel needle into the sample battery module at a speed of 25 mm/s in a direction perpendicular to the electrode plate of the battery cell until the needle penetrates a first battery cell to trigger thermal runaway. Observing the battery module, and recording the occurrence time of thermal runaway of a second battery cell that is adjacent to the first battery cell. If the battery cell that triggers thermal runaway does not cause the adjacent battery cell to catch fire or explode, it is determined that the thermal spread is obstructed; if fire or explosion occurs, it is determined that the thermal spread occurs.

### 2. Preparing a battery cell

### 1) NCM

Positive electrode plate: Dissolving LiNi_{0.8}Co_{0.1}Mn_{0.1}O₂ (NCM811) as a positive active material, acetylene black as a conductive agent, and polyvinylidene difluoride (PVDF) as a binder in an N-methyl-pyrrolidone (NMP) solvent at a weight ratio of 90: 5: 5, and stirring and mixing the ingredients well to obtain a positive electrode slurry. Subsequently, coating a positive current collector with the positive electrode slurry evenly, and performing drying, cold pressing, and slitting to obtain a positive electrode plate.

Negative electrode plate: Dissolving artificial graphite as an active material, acetylene black as a conductive carbon, styrene butadiene rubber (SBR) as a binder, sodium carboxymethyl cellulose (CMC) as a thickener at a weight ratio of 90: 4: 4: 2 in a deionized water solvent, and mixing the ingredients evenly to form a negative electrode slurry. Coating a negative current collector copper foil with the negative electrode slurry evenly at one or more attempts, drying the slurry to obtain a negative electrode film, and then performing cold pressing and slitting to obtain a negative electrode plate.

Electrolyte solution: Mixing EC and EMC well in an argon atmosphere glovebox (H₂O < 0.1 ppm, Oz < 0.1 ppm) at a volume ratio of 3: 7 to form an organic solvent, adding and dissolving a LiPF₆ lithium salt at a weight percent of 12.5 wt% in the organic solvent, and stirring the ingredients well to obtain a corresponding electrolyte solution.

Preparing a battery: Taking the positive electrode plate and the negative electrode plate manufactured above, using a polypropylene film as a separator, and stacking the positive electrode plate, the separator, and the negative electrode plate sequentially in such way that the separator is located between the positive electrode plate and the negative electrode plate to serve a function of separation. Winding the stacked structure to obtain an electrode assembly. Placing the electrode assembly in a battery housing. Drying the battery housing, and then injecting an electrolyte solution. Performing steps such as chemical formation and standing to obtain a lithium-ion secondary battery as a battery cell.

Mixed NCM: (just used as an example, the mixing ratio needs to be adjusted according to actual needs) Positive electrode plate: Dissolving positive active materials (including LiNi_{0.8}Co_{0.1}Mn_{0.1}O₂ (NCM811) and carbon-coated lithium iron phosphate (LFP)), acetylene black as a conductive agent, and polyvinylidene difluoride (PVDF) as a binder in an N-methyl-pyrrolidone (NMP) solvent at a weight ratio of 60: 30: 5: 5, and stirring and mixing the ingredients well to obtain a positive electrode slurry. Subsequently, coating a positive current collector with the positive electrode slurry evenly, and performing drying, cold pressing, and slitting to obtain a positive electrode plate.

Negative electrode plate: Dissolving artificial graphite as an active material, acetylene black as a conductive carbon, styrene butadiene rubber (SBR) as a binder, sodium carboxymethyl cellulose (CMC) as a thickener at a weight ratio of 90: 4: 4: 2 in a deionized water solvent, and mixing the ingredients evenly to form a negative electrode slurry. Coating a negative current collector copper foil with the negative electrode slurry evenly at one or more attempts, drying the slurry to obtain a negative electrode film, and then performing cold pressing and slitting to obtain a negative electrode plate.

Electrolyte solution: Mixing EC and EMC well in an argon atmosphere glovebox (H₂O < 0.1 ppm, Oz < 0.1 ppm) at a volume ratio of 3: 7 to form an organic solvent, adding and dissolving a LiPF₆ lithium salt at a weight percent of 12.5 wt% in the organic solvent, and stirring the ingredients well to obtain a corresponding electrolyte solution.

Preparing a battery: Taking the positive electrode plate and the negative electrode plate manufactured above, using a polypropylene film as a separator, and stacking the positive electrode plate, the separator, and the negative electrode plate sequentially in such way that the separator is located between the positive electrode plate and the negative electrode plate to serve a function of separation. Winding the stacked structure to obtain an electrode assembly. Placing the electrode assembly in a battery housing. Drying the battery housing, and then injecting an electrolyte solution. Performing steps such as chemical formation and standing to obtain a lithium-ion secondary battery as a battery cell.

### 2) LFP

Positive electrode plate: Dissolving the carbon-coated lithium iron phosphate (LFP) as a positive active material, acetylene black as a conductive agent, and polyvinylidene difluoride (PVDF) as a binder in N-methyl pyrrolidone (NMP) solvent at a weight ratio of 96: 2: 2, and stirring and mixing the ingredients well to obtain a positive electrode slurry. Further, sifting the selected particle materials of lithium iron phosphate and lithium manganese iron phosphate by using a particle screening machine. Grading the materials into different classes with different volume median diameter D₅₀ values, and applying the different classes of materials to the preparation process of the corresponding battery cells. Coating a positive current collector aluminum foil with the positive electrode slurry evenly, and then performing steps of drying, cold pressing, and slitting to obtain a positive electrode plate.

Negative electrode plate: Dispersing artificial graphite as a negative active material, acetylene black as a conductive agent, styrene-butadiene rubber (SBR) as a binder, and sodium carboxymethyl cellulose (CMC-Na) as a thickener in a deionized water solvent at a weight ratio of 95: 2: 2: 1, and stirring the solution well to obtain a negative electrode slurry. Coating a negative current collector copper foil with the negative electrode slurry evenly, and performing drying, cold pressing, and slitting to obtain a negative electrode plate.

Electrolyte solution: Mixing ethylene carbonate (EC), dimethyl carbonate (DMC), and ethyl methyl carbonate (EMC) well in an argon atmosphere glovebox (H₂O < 0.1 ppm, Oz < 0.1 ppm) at a weight ratio specified in Table 1 and Table 2 to form an organic solvent. Adding lithium hexafluorophosphate (LiPF₆) as a lithium salt and adjusting the concentration of the lithium salt to 1 m/L. Stirring the ingredients well to obtain a corresponding electrolyte solution.

Preparing a battery: Taking the positive electrode plate and the negative electrode plate manufactured above, using a polypropylene film as a separator, and stacking the positive electrode plate, the separator, and the negative electrode plate sequentially in such way that the separator is located between the positive electrode plate and the negative electrode plate to serve a function of separation. Winding the stacked structure to obtain an electrode assembly. Placing the electrode assembly in a battery housing. Drying the battery housing, and then injecting an electrolyte solution. Performing steps such as chemical formation and standing to obtain a lithium-ion secondary battery as a battery cell.

### 3) Lithium manganese iron phosphate (LMFP)

Positive electrode plate: Dissolving LiMn_{0.6}Fe_{0.4}PO₄ (LMFP) as a positive active material, acetylene black as a conductive agent, and polyvinylidene difluoride (PVDF) as a binder in N-methyl pyrrolidone (NMP) solvent at a weight ratio of 96: 2: 2, and stirring and mixing the ingredients well to obtain a positive electrode slurry. Further, sifting the selected particle materials of lithium iron phosphate and lithium manganese iron phosphate by using a particle screening machine. Grading the materials into different classes with different volume median diameter D₅₀ values, and applying the different classes of materials to the preparation process of the corresponding battery cells. Coating a positive current collector aluminum foil with the positive electrode slurry evenly, and then performing steps of drying, cold pressing, and slitting to obtain a positive electrode plate.

Negative electrode plate: Dispersing artificial graphite as a negative active material, acetylene black as a conductive agent, styrene-butadiene rubber (SBR) as a binder, and sodium carboxymethyl cellulose (CMC-Na) as a thickener in a deionized water solvent at a weight ratio of 95: 2: 2: 1, and stirring the solution well to obtain a negative electrode slurry. Coating a negative current collector copper foil with the negative electrode slurry evenly, and performing drying, cold pressing, and slitting to obtain a negative electrode plate.

Electrolyte solution: Mixing ethylene carbonate (EC), dimethyl carbonate (DMC), and ethyl methyl carbonate (EMC) well in an argon atmosphere glovebox (H₂O < 0.1 ppm, Oz < 0.1 ppm) at a weight ratio specified in Table 1 and Table 2 to form an organic solvent. Adding lithium hexafluorophosphate (LiPF₆) as a lithium salt and adjusting the concentration of the lithium salt to 1 m/L. Stirring the ingredients well to obtain a corresponding electrolyte solution.

Preparing a battery: Taking the positive electrode plate and the negative electrode plate manufactured above, using a polypropylene film as a separator, and stacking the positive electrode plate, the separator, and the negative electrode plate sequentially in such way that the separator is located between the positive electrode plate and the negative electrode plate to serve a function of separation. Winding the stacked structure to obtain an electrode assembly. Placing the electrode assembly in a battery housing. Drying the battery housing, and then injecting an electrolyte solution. Performing steps such as chemical formation and standing to obtain a lithium-ion secondary battery as a battery cell.

### 4) SIB

Positive electrode plate: Dissolving an oxide of sodium NazFeOz as a positive active material, acetylene black as a conductive agent, and polyvinylidene difluoride (PVDF) as a binder in an N-methyl-pyrrolidone (NMP) solvent at a weight ratio of 90: 5: 5, and stirring and mixing the ingredients well to obtain a positive electrode slurry. Subsequently, coating a positive current collector with the positive electrode slurry evenly, and performing drying, cold pressing, and slitting to obtain a positive electrode plate.

Negative electrode plate: Dissolving artificial graphite as an active material, acetylene black as a conductive carbon, styrene butadiene rubber (SBR) as a binder, sodium carboxymethyl cellulose (CMC) as a thickener at a weight ratio of 90: 4: 4: 2 in a deionized water solvent, and mixing the ingredients evenly to form a negative electrode slurry. Coating a negative current collector copper foil with the negative electrode slurry evenly at one or more attempts, drying the slurry to obtain a negative electrode film, and then performing cold pressing and slitting to obtain a negative electrode plate.

Electrolyte solution: Mixing EC and EMC well in an argon atmosphere glovebox (H₂O < 0.1 ppm, Oz < 0.1 ppm) at a volume ratio of 3: 7 to form an organic solvent, adding and dissolving a LiPF₆ lithium salt at a weight percent of 12.5 wt% in the organic solvent, and stirring the ingredients well to obtain a corresponding electrolyte solution.

Preparing a battery: Taking the positive electrode plate and the negative electrode plate manufactured above, using a polypropylene film as a separator, and stacking the positive electrode plate, the separator, and the negative electrode plate sequentially in such way that the separator is located between the positive electrode plate and the negative electrode plate to serve a function of separation. Winding the stacked structure to obtain an electrode assembly. Placing the electrode assembly in a battery housing. Drying the battery housing, and then injecting an electrolyte solution. Performing steps such as chemical formation and standing to obtain a lithium-ion secondary battery as a battery cell.

### 3. Assembling the battery pack

Adjusting the main materials of the battery cells described above, adjusting the type, composition, and dosage of the solvent and additives in the electrolyte solution, and adjusting the type and concentration of the electrolyte salt and the like to obtain two types of battery cells containing the electrolyte solution, where the conductivity and the viscosity ratio of the electrolyte solution as well as the volumetric energy density of the battery cells are shown in Table 1. Taking the battery cells prepared above from different main material systems, and placing the battery cells according to the quantity and regions shown in Table 1 to obtain battery packs of Embodiments 1 to 6 and Comparative Embodiments 1 to 3 in which the battery cells are arranged differently. In Embodiments 1 to 6 and Comparative Embodiments 1 to 3 of this application, each battery pack contains only two types of battery cells prepared by the method described above, denoted by a first battery cell and a second battery respectively, as shown in the table below. In the battery pack, the region A is a region formed by connecting four points on the horizontal length-width diagonals Lc of the battery pack, each of the four points is at a distance of 1/5 Lc from an endpoint of the corresponding diagonal, and a region located below a point that is at a distance of 1/5 of the vertical height Ld of the battery pack from the bottom. The remaining region of the battery pack is the region B. The number of all battery cells contained in the region A is 48, of which the number of the first battery cells is 40, and the number of the second battery cells is 8. The number of all battery cells contained in the region B is 72, of which the number of the first battery cells is 27, and the number of the second battery cells is 45.

The battery packs prepared in each embodiment are tested, and the test results are shown in Table 1.

**Table 1 Test results of corresponding parameters of battery packs in Embodiments 1 to 6 and Comparative Embodiments 1 to 3**

| | First battery | Second battery | Volumetric energy density (D₂/D₁) | -10 °C conductivity of electrolyte solution (σ₂/σ₁) | -10 °C viscosity of electrolyte solution (η₂/η₁) | K₂/K₁ | M₂/M₁ | -20 °C capacity retention rate of battery pack (%) | Thermal spread test result of modules |
|---|---|---|---|---|---|---|---|---|---|
| Embodiment 1 | NCM | NCM | 1 | 0.94 | 1.2 | 0.94 | 0.83 | 74.5% | Thermal spread obstructed |
| Embodiment 2 | Mixed NCM | NCM | 1.17 | 1 | 1 | 1.37 | 1.17 | 75.2% | Thermal spread obstructed |
| Embodiment 3 | LMFP | NCM | 1.23 | 1 | 1 | 1.51 | 1.23 | 73.6% | Thermal spread obstructed |
| Embodiment 4 | SIB | NCM | 2.35 | 0.43 | 1.38 | 2.37 | 1.70 | 78% | Thermal spread obstructed |
| Embodiment 5 | SIB | LFP | 1.38 | 0.72 | 0.77 | 1.37 | 1.79 | 70% | Thermal spread obstructed |
| Embodiment 6 | SIB | LMFP | 1.58 | 0.63 | 1 | 1.57 | 1.58 | 78% | Thermal spread obstructed |
| Comparative Embodiment | NCM | NCM | 1 | 1 | 1 | 1 | 1 | 73.5% | Thermal spread occurred |

| | First battery | Second battery | Volumetric energy density (D₂/D₁) | -10 °C conductivity of electrolyte solution (σ₂/σ₁) | -10 °C viscosity of electrolyte solution (η₂/η₁) | K₂/K₁ | M₂/M₁ | -20 °C capacity retention rate of battery pack (%) | Thermal spread test result of modules |
|---|---|---|---|---|---|---|---|---|---|
| 1 | | | | | | | | | |
| Comparative Embodiment 2 | LFP | LFP | 1 | 1 | 1 | 1 | 1 | 52% | Thermal spread obstructed |
| Comparative Embodiment 3 | NCM | LMFP | 0.81 | 1 | 1 | 0.66 | 0.81 | 73.2% | Thermal spread occurred |

As can be seen from Table 1. when the volumetric energy density D is identical between the two types of battery cells in the battery pack, setting the value of K₂/K₁ or M₂/M₁ to be less than 1 can make the battery pack endowed with a relatively high capacity retention rate and compliant with the thermal spread obstruction requirement, as shown in Embodiment 1. Conversely, as shown in Comparative Embodiment 1, for the same NCM battery cell, when the value of K₂/K₁ or M₂/M₁ is 1, the battery pack declines in terms of the capacity retention rate, and fails the thermal spread obstruction test. Similarly, for battery cells of an LFP system, when the volumetric energy density D is identical between the two types of battery cells in the battery pack, setting the value of K₂/K₁ or M₂/M₁ to be 1 declines the capacity retention rate of the battery pack severely (as shown in Comparative Embodiment 2).

In addition, when a battery pack of a mixed system is formed by using battery cells of different systems, the volumetric energy density D differs between the two types of battery cells. Therefore, setting the value of K₂/K₁ or M₂/M₁ to be greater than 1 brings a relatively high capacity retention rate and satisfies the thermal spread obstruction requirement, as shown in Embodiments 2 to 6. For different battery systems, the capacity retention rate is related to the specific battery system employed, but does not change in proportion to the value of K₂/K₁ or M₂/M₁. However, when the value of K₂/K₁ or M₂/M₁ in the mixed system is less than 1, the battery pack declines to some extent in terms of the capacity retention rate, and fails the thermal spread obstruction test (as shown in Comparative Embodiment 3).

Although this application has been described with reference to embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery pack, comprising at least a first battery cell and a second battery cell, wherein the battery pack comprises a region A and a region B, the region A is a region of a low thermal insulation capability and is located on all sides and/or at a bottom of the battery pack, a remaining region is the region B, a percentage of a number of the first battery cells among battery cells comprised in the region A is 10% to 100%, and a percentage of a number of the second battery cells among battery cells comprised in the region B is 5% to 100%;
a volumetric energy density D of the first battery cell and a volumetric energy density D of the second battery cell are D₁ and D₂ respectively, an ionic conductivity σ of an electrolyte solution at -10 °C is σ₁ in the first battery cell and σ₂ in the second battery cell, and it is defined that K = D² × σ, so that K₁ = D₁² × σ₁ and K₂ = D₂²×σ₂;
when D₁ = D₂, K satisfies 0.2 < K₂/K₁ ≤ 0.99; and
when D₁ ≠ D₂, K satisfies 1.01 ≤ K₂/K₁ ≤ 10.

2. The battery pack according to claim 1, wherein, when D₁ = D₂, K satisfies 0.25 ≤ K₂/K₁ ≤ 0.98, and optionally 0.3 ≤ K₂/K₁ ≤ 0.96.

3. The battery pack according to claim 1, wherein, when D₁ ≠ D₂, K satisfies 1.02 ≤ K₂/K₁ ≤ 5, and optionally 1.03 ≤ K₂/K₁ ≤ 3.

4. The battery pack according to claim 1 or 2, wherein, when D₁ = D₂, at -10 °C, the ionic conductivity σ₁ of the electrolyte solution in the first battery cell and the ionic conductivity σ₂ of the electrolyte solution in the second battery cell satisfy 0 < |σ₁ - σ₂| < 8 mS/cm, and optionally 0.05 mS/cm < |σ₁ - σ₂| < 7 mS/cm, and further optionally 0.1 mS/cm < |σ₁ - σ₂| < 6 mS/cm.

5. A battery pack, comprising at least a first battery cell and a second battery cell, wherein the battery pack comprises a region A and a region B, the region A is a region of a low thermal insulation capability and is located on all sides and/or at a bottom of the battery pack, a remaining region is the region B, a percentage of a number of the first battery cells among battery cells comprised in the region A is 10% to 100%, and a percentage of a number of the second battery cells among battery cells comprised in the region B is 5% to 100%;
a volumetric energy density D of the first battery cell and a volumetric energy density D of the second battery cell are D₁ and D₂ respectively, a viscosity η of an electrolyte solution at -10 °C is η₁ in the first battery cell and η₂ in the second battery cell, and it is defined that M = D/η, so that M₁ = D₁/η₁, M₂ = D₂/η₂;
when D₁ = D₂, M satisfies 0.2 < M₂/M₁ ≤ 0.99; and
when D₁ ≠ D₂, M satisfies 1.01 ≤ M₂/M₁ ≤ 10.

6. The battery pack according to claim 5, wherein, when D₁ = D₂, M satisfies 0.25 ≤ M₂/M₁ ≤ 0.98, and optionally 0.3 ≤ M₂/M₁ ≤ 0.96.

7. The battery pack according to claim 5, wherein, when D₁ ≠ D₂, M satisfies 1.02 ≤ M₂/M₁ ≤ 9, and optionally 1.03 ≤ M₂/M₁ ≤ 8.

8. The secondary battery according to claim 5 or 6, wherein, when D₁ = D₂, at - 10 °C, the viscosity η₁ of the electrolyte solution in the first battery cell and the viscosity η₂ of the electrolyte solution in the second battery cell satisfy 0 < |η₂ - η₁| < 5 mPa·s, and optionally 0.05 mPa·s < |η₂ - η₁| < 4 mPa·s, and further optionally 0.1 mPa·s < |η₂ - η₁| < 3 mPa·s.

9. The battery pack according to any one of claims 1 to 8, wherein a percentage of a number of the first battery cells among battery cells comprised in the region A is 10% to 90%, and optionally 10% to 90%, and further optionally 20% to 80%; and, a percentage of a number of the second battery cells among battery cells comprised in the region B is 20% to 100%, and optionally 40% to 100%, and further optionally 60% to 100%.

10. The battery pack according to any one of claims 1 to 9, wherein length-width diagonals of the battery pack in a horizontal direction are Lc, a region formed by connecting four points on the two diagonals is defined as the region B, each of the four points is at a distance of 1/5 Lc from an endpoint of the corresponding diagonal, and a remaining region is defined as the region A.

11. The battery pack according to any one of claims 1 to 10, wherein, when the battery cells in the battery pack are stacked in a plurality of layers, a vertical height of the battery pack is defined as Ld, a region located below a point that is at a distance of 1/5 Ld from the bottom is defined as the region A, and a remaining region corresponding to 4/5 Ld above the point is defined as the region B.

12. The battery pack according to any one of claims 1 to 11, wherein different regions in the battery pack are endowed with different thermal insulation capabilities, and at least two types of regions satisfy a condition that a temperature difference ΔT between the two types of regions falls within a range of 0 < ΔT < 10 °C, and optionally 0.1 < ΔT < 9 °C, and further optionally 0.2 < ΔT < 8 °C.

13. The battery pack according to any one of claims 1 to 12, wherein a film-forming resistance of a positive electrode plate in the first battery cell and a film-forming resistance of a positive electrode plate in the second battery cell are Rct1 and Rct2 respectively, and the two film-forming resistances satisfy 1 ≤ Rct1/Rct2 ≤ 4, and optionally 1.01 ≤ Rct1/Rct2 ≤ 3.5, and further optionally 1.02 ≤ Rct1/Rct2 ≤ 3.

14. The battery pack according to any one of claims 1 to 13, wherein a coagulation point of the electrolyte solution of all battery cells in the battery pack is less than or equal to -20 °C, and optionally less than or equal to -30 °C.

15. The battery pack according to any one of claims 1 to 14, wherein a volumetric energy density D of both the first battery cell and the second battery cell satisfies 100 Wh/L < D < 1000Wh/L, and optionally 200 Wh/L < D < 900 Wh/L, and further optionally 300 Wh/L < D < 800 Wh/L.

16. The battery pack according to any one of claims 1 to 15, wherein, when D₁ ≠ D₂, the battery pack further comprises a third battery cell, the third battery cell is formed by a mixture of a main material system of the first battery cell and a main material system of the second battery cell, a volumetric energy density of the third battery cell is D₃, and D₃ falls between D₁ and D₂.

17. The battery pack according to claim 16, wherein
an ionic conductivity σ of an electrolyte solution of the third battery cell at -10 °C is σ₃, and, when it is defined that K₃ = D₃² × σ₃, K₃ falls between K₁ and K₂; or
a viscosity η of an electrolyte solution of the third battery cell at -10 °C is η₃, and, when it is defined that M₃ = D₃/η₃, M₃ falls between M₁ and M₂.

18. The battery pack according to any one of claims 1 to 17, wherein the battery cells each are independently selected from a lithium-ion battery, a lithium metal battery, or a sodium-ion battery.

19. The battery pack according to claim 18, wherein a chemical system of a positive active material of the battery cell is independently selected from a lithium nickel cobalt manganese system, a lithium iron phosphate system, a lithium manganese iron phosphate system, a lithium vanadium iron phosphate system, a lithium vanadium phosphate system, a lithium cobalt oxide system, a lithium nickel oxide system, a lithium-rich manganese system, a lithium nickel cobalt aluminum system, a lithium manganese oxide system, or a Prussian blue system, a polyanion-based system, an oxide-based system, or a dual-ion battery system.

20. The battery pack according to any one of claims 1 to 19, comprising *a* first battery cells and *b* second battery cells, wherein *a* and *b* are both natural numbers greater than or equal to 1, and 0.01 < *a*/*b* ≤ 200, and optionally 0.05 ≤ *a*/*b* ≤ 180, and further optionally 0.1 ≤ *a*/*b* ≤ 150.

21. An electrical device, comprising the battery pack according to any one of claims 1 to 20.
